# EUROPÄISCHE PATENTSCHRIFT

(11) **EP 2 602 164 B1**
(45) Veröffentlichungstag und Bekanntmachung des Hinweises auf die Patenterteilung: **08.10.2014**
(21) Anmeldenummer: 12005833.4
(22) Anmeldetag: 11.08.2012
(51) Int. Cl.: B60T 17/04, F02M 35/12, F02M 35/10, F02M 35/16

(54) **Anordnung einer Absaugeinrichtung für ein Zusatzaggregat**
Arrangement of a suction device for an auxiliary apparatus
Agencement d'un dispositif d'aspiration pour un agrégat auxiliaire

(30) Priorität: 08.12.2011 DE 102011120472
(43) Veröffentlichungstag der Anmeldung: 12.06.2013
(73) Patentinhaber: MAN Truck & Bus AG, 80995 München (DE)
(72) Erfinder: Kneissl, Franz, 85221 Dachau (DE); Gerdiken, Karl Josef, 90530 Wendelstein (DE); Gerg, Thomas, 80799 München (DE)

(56) Entgegenhaltungen:
- WO-A1-2007/031401
- DE-A1-102008 049 806
- JP-A- 2005 264 886
- US-A- 5 756 945

## Beschreibung

Die vorliegende Erfindung betrifft eine Anordnung einer Absaugeinrichtung für ein Zusatzaggregat, insbesondere einem Luftpresser, an einem Ansaugsystem einer Brennkraftmaschine, gemäß dem Oberbegriff des Patentanspruchs 1.

Die DE 10 2008 049 806 A1 beschreibt ein Ansaugsystem für Brennkraftmaschinen in Kraftfahrzeugen, bei dem innerhalb eines trommelförmigen Luftfilters auf der Reinluftseite eine abgehende Ansaugleitung integriert ist, die in baulich günstiger Weise zugleich eine Luftmassenmesseinrichtung mit einem Sensor, zum Beispiel nach dem Prinzip der Hitzfilmanemometrie oder nach dem Ultraschallprinzip, zur Berechnung der zuzumessenden Kraftstoffmenge aufweist.

In der WO 2007/031401 A1 ist ein Ansaugsystem mit einem Resonator für eine Kraftfahrzeug-Brennkraftmaschine offenbart, wobei der Resonator ein Gehäuse und einem von dem Gehäuse umschlossenem Resonatorraum umfasst. Dabei sind in dem Gehäuse eine Lufteintrittsöffnung und eine Luftaustrittsöffnung für den Resonatorraum vorgesehen. Die Luftaustrittsöffnung des Resonatorraums stellt gleichzeitig eine Ansaugöffnung eines Zusatzaggregates, insbesondere eines Luftpressers, dar.

Soll an ein derartiges Ansaugsystem zum Beispiel aus Geräuschgründen ein die Ansaugluftmenge beeinflussendes Zusatzaggregat, insbesondere ein Luftpresser einer Druckluft-Bremsanlage, etc. angeschlossen werden, so muss die Anschlussstelle stromauf des Sensors der Zumesseinrichtung liegen und darf die Strömungsverhältnisse an der Messstelle nicht nachteilig beeinflussen. Beides würde zu einer Verfälschung in der Berechnung des gewünschten Kraftstoff-Luft-Verhältnisses führen.

Aufgabe der Erfindung ist es, eine Anordnung der gattungsgemäßen Art vorzuschlagen, die baulich und fertigungstechnisch einfach ausgebildet ist und die keine Beeinträchtigung der Luftmassenmessung und/oder der Kraftstoff-Zumesseinrichtung bewirkt.

Die Lösung dieser Aufgabe gelingt mit den Merkmalen des Patentanspruchs 1. Vorteilhafte Ausgestaltungen der Erfindung sind Gegenstand der Unteransprüche.

Erfindungsgemäß wird vorgeschlagen, dass an der Verbrennungsluft-Ansaugleitung ein ein Resonanz- und/oder Dämpfungsvolumen bildendes, nach außen geschlossenes Gehäuse vorgesehen ist, in das eine Zusatzaggregat-Absaugleitung der Absaugeinrichtung an einer von der Verbrennungsluft-Ansaugleitung beabstandeten bzw. entfernten Stelle mündet, wobei in der Verbrennungsluft-Ansaugleitung wenigstens eine zum Resonanz- und/oder Dämpfungsvolumen offene Ausnehmung ausgebildet ist.

Durch diese Merkmale gelingt es, in baulich gedrängter Weise in Nähe des Luftmassensensors auf der Reinluftseite Ansaugluft zu entnehmen, wobei gegebenenfalls von der Zusatzaggregat-Absaugleitung ausgehende Pulsationen oder Strömungsbeeinflussungen über das Dämpfungsvolumen geglättet oder absorbiert werden. Die Messgenauigkeit der Luftmassenmessung bzw. der Kraftstoff-Zumessung wird dadurch nicht nachteilig beeinflusst.

Das Gehäuse kann in baulich bevorzugter Ausführung einen den Sensor aufweisenden Abschnitt der Verbrennungsluft-Ansaugleitung umgeben bzw. umschließen, wobei der Anschluss der Zusatzaggregat-Absaugleitung in einer Umfangswand des Gehäuses vorgesehen ist. Damit kann in günstiger Weise ein ausreichender Abstand zwischen der Ausnehmung in der z.B. als Ansaugrohr ausgeführten Verbrennungsluft-Ansaugleitung und der Anschlussstelle der Absaugeinrichtung mit entsprechender Dämpfungswirkung hergestellt werden.

In vorteilhafter Weiterbildung der Erfindung wird vorgeschlagen, dass die Ausnehmung in dem Abschnitt der Verbrennungsluft-Ansaugleitung durch einen umlaufenden Ringspalt gebildet ist. Neben der fertigungstechnisch besonders einfachen Ausbildung der Ringspalts wird eine weiter verbesserte Dämpfungswirkung durch das den Ringspalt umgebende Dämpfungsvolumen und eine Strömungsberuhigung sichergestellt. Die Querschnittsfläche des Gehäuses im Bereich der Ausnehmung sollte dabei deutlich, das heißt um ein Mehrfaches, zum Beispiel das 2- bis 3-fache größer als die Querschnittsfläche der Absaugleitung für das oder die Zusatzaggregate sein.

In einer weiteren, vorteilhaften Ausgestaltung der Erfindung kann das das Resonanz - und/oder Dämpfungsvolumen bildende Gehäuse unmittelbar an das Luftfiltergehäuse des Ansaugsystems angebaut sein und mit der Reinluftseite des Luftfilters entsprechend kommunizieren. Daraus resultiert in günstiger Weise eine Vormontageeinheit aus Luftfilter, integrierter Luftmassenmessung bzw. Kraftstoff-Zumesseinrichtung und einer Anschlussstelle für die Absaugeinrichtung.
Schließlich kann der in das Gehäuse integrierte, an die wenigstens eine Ausnehmung bzw. den Ringspalt anschließende Abschnitt der Verbrennungsluft-Ansaugleitung unmittelbar durch ein kalibriertes Messrohr der Luftmassenmesseinrichtung gebildet sein, in das der Sensor entsprechend eingesetzt ist und an das das weitere Ansaugsystem der Brennkraftmaschine montagegünstig anschließbar ist.

Das das Resonanz- und/oder Dämpfungsvolumen bildende Gehäuse mit dem kalibrierten Messrohr und dem Sensor kann dabei in einer beliebigen Winkellage an das Luftfiltergehäuse des Ansaugsystems angeschlossen werden.

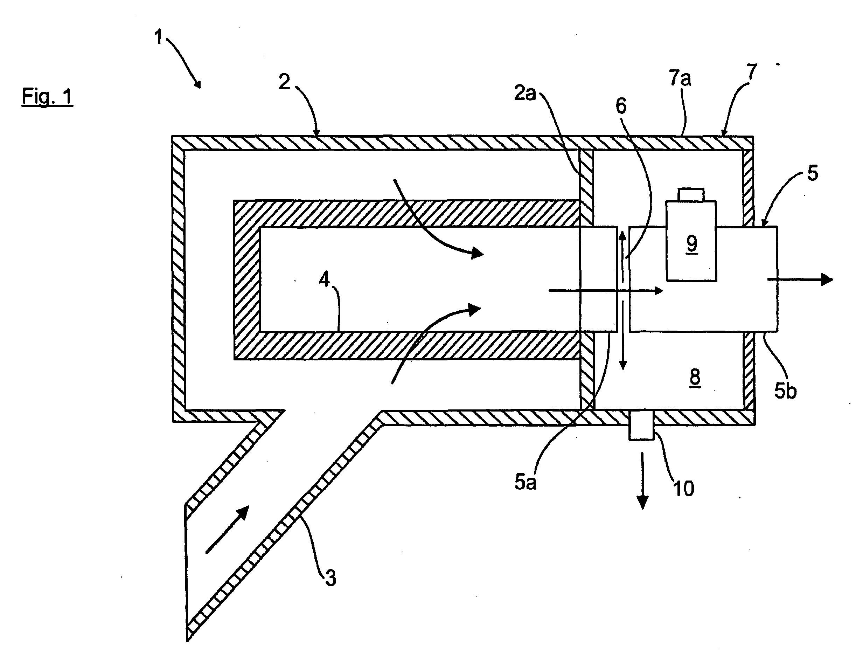

Ein Ausführungsbeispiel der Erfindung ist im Folgenden anhand der beigefügten Zeichnung näher erläutert, die schematisch einen trommelförmigen Luftfilter für Brennkraftmaschinen in Kraftfahrzeugen mit einem integrierten Luftmassensensor einer Kraftstoff-Zumesseinrichtung und einem integrierten Resonanz- bzw. Dämpfungsvolumen für eine Absaugeinrichtung eines zum Beispiel Luftpressers zeigt.

In der Zeichnung ist mit 1 ein teilweise dargestelltes Ansaugsystem für Verbrennungsluft einer Brennkraftmaschine für Kraftfahrzeuge bezeichnet, mit einem in ein trommelförmiges Luftfiltergehäuse 2 mündenden Zuführrohr 3, einem zylinderförmigen Luftfilter 4 und einem durch eine Zwischenwand 2a weiterführenden Ansaugrohr 5, das eine Verbrennungsluft-Ansaugleitung ausbildet. Die von der Brennkraftmaschine angesaugte Verbrennungsluft durchströmt den Luftfilter 4 vom Zuführrohr 3 zum Ansaugrohr 5 gemäß den eingezeichneten Pfeilen.

Das Ansaugrohr 5 ist unter Bildung eines umlaufenden Ringspalts 6 in zwei Abschnitte 5a, 5b unterteilt und in einem unmittelbar an das Luftfiltergehäuse 2 angebauten, im Querschnitt bevorzugt zylinder- bzw. ringförmigen Gehäuse 7 angeordnet.

Das Gehäuse 7 ist nach Außen abgeschlossen und umschließt das Ansaugrohr 5 unter Bildung eines definierten Resonanz- bzw. Dämpfungsvolumens 8. Die Querschnittsfläche des Gehäuses 7 ist dabei wie ersichtlich etwa um den Faktor 2 bis 3 größer als die Querschnittsfläche des Ansaugrohrs 5 im Bereich des Ringspalts 6. Der aus dem Gehäuse 7 herausgeführte Abschnitt 5b des Ansaugrohrs 5 ist als Messrohr einer nicht weiter dargestellten Kraftstoff-Zumesseinrichtung der Brennkraftmaschine ausgeführt, in das ein Luftmassensensor 9 an sich bekannter Bauart eingesetzt ist.

In der Umfangswand 7a des Gehäuses 7 ist an einer von dem Ringspalt 6 als Ausnehmung im Ansaugrohr 5 entfernt liegenden Stelle ein Anschluss einer Absaugleitung 10 eines zum Beispiel Luftpressers (nicht dargestellt) als Zusatzaggregat vorgesehen, über die stromauf des Sensors 9, jedoch stromab des Luftfilters 4 (Reinluftseite) Verbrennungsluft aus der Verbrennungsluft-Ansaugleitung 5a entnehmbar ist.

Gegebenenfalls von dem Luftpresser ausgehende Pulsationen oder Verwirbelungen werden über das Resonanz- bzw. Dämpfungsvolumen 8 im Gehäuse 7 geglättet bzw. absorbiert und können sich nicht nachteilig auf die Messgenauigkeit der Luftmassenmessung bzw. der Kraftstoff-Zumesseinrichtung 5b, 9 auswirken.

Über das die Zumesseinrichtung 5b, 9 aufnehmende, an das Luftfiltergehäuse 2 unmittelbar angebaute Gehäuse 7 ist ein baulich und räumlich günstiges, eine Vormontageeinheit bildendes Ansaugsystem 1 geschaffen, an das das weiterführende Ansaugsystem der Brennkraftmaschine mit Ansaugluftverteiler, etc. anschließbar ist.

Die Erfindung ist nicht auf das beschriebene Ausführungsbeispiel beschränkt.

Insbesondere ist die Erfindung nicht auf Saugmotoren beschränkt, sie lässt sich vielmehr auch bei aufgeladenen Motoren verwenden. Wenn also im Vorstehenden von Saugrohr, Ansaugrohr oder Verbrennungsluft-Ansaugleitung die Rede ist, so muss dieses bzw. diese nicht zwangsläufig direkt mit dem Ansaugkrümmer der Brennkraftmaschine verbunden sein, es kann vielmehr eine ein- oder mehrstufige Kompressoraufladung zwischengeschaltet sein, wobei die Saugseiten mit dem Ansaugrohr der erfindungsgemäßen Anordnung und die Druckseiten mit der Ladeluftrohr der Brennkraftmaschine verbunden ist. Als Antriebseinrichtung für die Kompressoraufladung kommen Abgasbetriebene Turbinen ebenso in Betracht, wie von der Kurbelwelle der Brennkraftmaschine beaufschlagte Triebstränge oder elektrische Antriebe.

Weiter kann gegebenenfalls die Ausnehmung 6 im Ansaugrohr 5 auch durch Bohrungen, Durchbrüche, etc. ausgeführt sein.
Das Gehäuse 7 für das umgebende Dämpfungsvolumen 8 kann angepasst an andere bauliche Gegebenheiten nicht ringförmig um das Ansaugrohr 5, sondern zum Beispiel einseitig an dieses angebaut sein.

Schließlich kann auch ein anderes Zusatzaggregat als ein Luftpresser oder es können mehrere, Ansaugluft absaugende Zusatzaggregate an das Gehäuse 7 mit dem Dämpfungsvolumen 8 angeschlossen sein.

Der Luftfilter 4 kann beliebiger Bauart sein, z.B durch ein einfaches, einwandiges Filterelement gebildet sein. Selbstverständlich kann der Luftfilter 4 aber auch doppelwandig aufgebaut sein, das heißt zum Beispiel durch ein Filterelement mit einem innenliegenden Filterelement (Sicherheitsfilterelement) ausgebildet sein.

### BEZUGSZEICHENLISTE

- 1: Ansaugsystem
- 2: Luftfiltergehäuse
- 2a: Zwischenwand
- 3: Zuführrohr
- 4: Luftfilter
- 5: Ansaugrohr
- 5a: Abschnitt des Ansaugrohrs
- 5b: Messrohr
- 6: Ringspalt
- 7: Gehäuse
- 7a: Umfangswand
- 8: Dämpfungsvolumen
- 9: Luftmassensensor
- 10: Absaugleitung

## Patentansprüche

1. Anordnung einer Absaugeinrichtung für ein Zusatzaggregat, insbesondere für einen Luftpresser, an einem Verbrennungsluft-Ansaugsystem (1) einer Brennkraftmaschine, wobei die Absaugeinrichtung für das Zusatzaggregat an eine Verbrennungsluft-Ansaugleitung (5) des Verbrennungsluft-Ansaugsystems (1) angeschlossen ist, wobei an der Verbrennungsluft-Ansaugleitung (5) ein ein Resonanz- und/oder Dämpfungsvolumen (8) bildendes, nach außen geschlossenes Gehäuse (7) ausgebildet ist, in das eine Zusatzaggregat-Absaugleitung (10) der Absaugeinrichtung für das Zusatzaggregat an einer von der Verbrennungsluft-Ansaugleitung (5) beabstandeten Anschlussstelle mündet, wobei in der Verbrennungsluft-Ansaugleitung (5) wenigstens eine zum Resonanz- und/oder Dämpfungsvolumen (8) offene Ausnehmung ausgebildet ist, **dadurch gekennzeichnet, dass** die Absaugeinrichtung stromab eines Luftfilters (4), jedoch stromauf eines Sensors (9) einer Luftmassenmesseinrichtung und/oder Kraftstoff-Zumesseinrichtung angeschlossen ist, wobei das das Resonanz- und/oder Dämpfungsvolumen (8) bildende Gehäuse (7) unmittelbar an ein Luftfiltergehäuse (2) des Ansaugsystems (1) angebaut ist und mit der Reinluftseite des Luftfilters (4) entsprechend kommuniziert, und wobei
- der Luftfilter (4),
- die integrierte Luftmassenmesseinrichtung und/oder Kraftstoff-Zumesseinrichtung und
- die Anschlussstelle für die Zusatzaggregat-Absaugleitung (10)
eine Vormontageeinheit bilden.

2. Anordnung nach Anspruch 1, **dadurch gekennzeichnet, dass** das Gehäuse (7) einen den Sensor (9) aufweisenden Abschnitt (5b) der Verbrennungsluft-Ansaugleitung (5) umschließt und dass die Anschlussstelle der Zusatzaggregat-Absaugleitung (10) in einer Umfangswand (7a) des Gehäuses (7) vorgesehen ist.

3. Anordnung nach Anspruch 2, **dadurch gekennzeichnet, dass** die Ausnehmung in der Verbrennungsluft-Ansaugleitung (5) durch einen umlaufenden Ringspalt (6) gebildet ist.

4. Anordnung nach einem der vorhergehenden Ansprüche, **dadurch gekennzeichnet, dass** die Querschnittsfläche des Gehäuses (7) im Bereich der Ausnehmung ein Mehrfaches größer als die Querschnittsfläche der Zusatzaggregat-Absaugleitung (10) ist.

5. Anordnung nach einem der vorhergehenden Ansprüche, **dadurch gekennzeichnet, dass** der in das Gehäuse (7) integrierte, an die bevorzugt durch einen Ringspalt (6) gebildete Ausnehmung anschließende Abschnitt der Verbrennungsluft-Ansaugleitung (5) durch ein kalibriertes Messrohr (5b) der Luftmassenmesseinrichtung gebildet ist, in das der Sensor (9) entsprechend eingesetzt ist und an das das weitere Ansaugsystem der Brennkraftmaschine anschließbar ist.

6. Anordnung nach Anspruch 5, **dadurch gekennzeichnet, dass** das das Resonanz- und/oder Dämpfungsvolumen (8) bildende Gehäuse (7) mit dem kalibrierten Messrohr (5b) und dem Luftmassensensor (9) in einer beliebigen Winkellage an das Luftfiltergehäuse (2) des Ansaugsystems (1) anschließbar ist.

## Claims

1. An arrangement of an extractor device for an ancillary assembly, in particular for an air compressor, on a combustion air intake system (1) of an internal combustion engine, wherein the extraction device for the ancillary assembly is arranged on a combustion air intake line (5) of the combustion air intake system (1), wherein on the combustion air intake line (5) is formed a housing (7) forming a resonance and/or damping volume (8) closed towards the outside, into which opens an ancillary assembly extraction line (10) of the extraction device for the ancillary assembly at a connection point spaced from the combustion air intake line (5), wherein in the combustion air intake line (5) is formed at least one recess open to the resonance and/or damping volume (8), **characterized in that** the extraction device is arranged downstream of an air filter (4) but upstream of a sensor (9) of an air mass meter and/or fuel supply metering device, wherein the housing (7) forming the resonance and/or damping volume (8) is attached directly to an air filter housing (2) of the intake system (1) and communicates accordingly with the clean air side of the air filter (4), and wherein
- the air filter (4),
- the integral air mass meter and/or fuel supply metering device and
- the connection point for the ancillary assembly extraction line (10)
form a pre-assembly unit.

2. The arrangement according to Claim 1, **characterized in that** the housing (7) surrounds a segment (5b) of the combustion air intake line (5) comprising the sensor (9), and that the connection point' of the ancillary assembly extraction line (10) is provided in a peripheral wall (7a) of the housing (7).

3. The arrangement according to Claim 2, **characterized in that** the recess in the combustion air intake line (5) is formed by a peripheral ring gap (6).

4. The arrangement according to any of the preceding claims, **characterized in that** the cross-sectional area of the housing (7) in the region of the recess is several times larger than the cross-sectional area of the ancillary assembly extraction line (10).

5. The arrangement according to any of the preceding claims, **characterized in that** the segment of the combustion air intake line (5) integrated in the housing (7) and connected to the recess preferably formed by a ring gap (6), is formed by a calibrated measurement pipe (5b) of the air mass meter in which the sensor (9) is inserted accordingly and to which the further intake system of the internal combustion engine can be connected.

6. The arrangement according to Claim 5, **characterized in that** the housing (7) forming the resonance and/or damping volume (8) with the calibrated measurement pipe (5b) and the air mass sensor (9) can be connected in an arbitrary angular position to the air filter housing (2) of the intake system (1).

## Revendications

1. Agencement d'un dispositif d'évacuation pour une unité auxiliaire, en particulier pour un compresseur d'air, sur un système d'aspiration d'air de combustion (1) d'un moteur à combustion interne, le dispositif d'évacuation pour l'unité auxiliaire étant raccordé à une conduite d'aspiration d'air de combustion (5) du système d'aspiration d'air de combustion (1), un boîtier (7) fermé vers l'extérieur et formant un volume de résonance et/ou d'amortissement (8) étant réalisé sur la conduite d'aspiration d'air de combustion (5), dans lequel boîtier débouche, en un point de raccordement espacé de la conduite d'aspiration d'air de combustion (5), une conduite d'évacuation d'unité auxiliaire (10) du dispositif d'évacuation pour l'unité auxiliaire, au moins un évidement ouvert sur le volume de résonance et/ou d'amortissement (8) étant réalisé dans la conduite d'aspiration d'air de combustion (5), **caractérisé en ce que** le dispositif d'évacuation est raccordé en aval d' un filtre à air (4), mais en amont d'un capteur (9) d'un dispositif de mesure de masse d'air et/ou d'un dispositif de dosage de carburant, le boîtier (7) formant le volume de résonance et/ou d'amortissement (8) étant fixé directement à un boîtier de filtre à air (2) du système d'aspiration (1) et communiquant en conséquence avec le côté d'air propre du filtre à air (4), et
- le filtre à air (4),
- le dispositif de mesure de masse d'air et/ou le dispositif de dosage de carburant intégré(s) et
- le point de raccordement pour la conduite d'évacuation d'unité auxiliaire (10) formant une unité de pré-montage.

2. Agencement selon la revendication 1, **caractérisé en ce que** le boîtier (7) entoure une portion (5b), comprenant le capteur (9), de la conduite d'aspiration d'air de combustion (5), et **en ce que** le point de raccordement de la conduite d'évacuation d'unité auxiliaire (10) est prévu dans une paroi périphérique (7a) du boîtier (7).

3. Agencement selon la revendication 2, **caractérisé en ce que** l'évidement dans la conduite d'aspiration d'air de combustion (5) est formé par un interstice annulaire périphérique (6).

4. Agencement selon l'une quelconque des revendications précédentes, **caractérisé en ce que** la surface de la section transversale du boîtier (7) dans la région de l'évidement est plusieurs fois supérieure à la surface de la section transversale de la conduite d'évacuation d'unité auxiliaire (10).

5. Agencement selon l'une quelconque des revendications précédentes, **caractérisé en ce que** la portion de la conduite d'aspiration d'air de combustion (5) intégrée dans le boîtier (7) et se raccordant à l'évidement formé de préférence par un interstice annulaire (6) est formée par un tube de mesure calibré (5b) du dispositif de mesure de masse d'air, dans lequel tube de mesure est inséré en conséquence le capteur (9) et auquel tube de mesure le système d'aspiration supplémentaire du moteur à combustion interne peut être raccordé.

6. Agencement selon la revendication 5, **caractérisé en ce que** le boîtier (7) formant le volume de résonance et/ou d'amortissement (8), avec le tube de mesure calibré (5b) et le capteur de masse d'air (9), peut être raccordé en une position angulaire quelconque au boîtier de filtre à air (2) du système d'aspiration (1).
